(19) **Europäisches Patentamt / European Patent Office / Office européen des brevets**

(11) **EP 2 862 267 B1**

(12) **FASCICULE DE BREVET EUROPEEN**

(45) Date de publication et mention de la délivrance du brevet:
**13.01.2016 Bulletin 2016/02**

(21) Numéro de dépôt: **13725991.7**

(22) Date de dépôt: **31.05.2013**

(51) Int Cl.:
*H02M 1/32* (2007.01)     *H02P 3/22* (2006.01)
*H02P 27/06* (2006.01)    *H02M 1/36* (2007.01)
*H02M 5/458* (2006.01)    *G01R 31/42* (2006.01)

(86) Numéro de dépôt international:
**PCT/EP2013/061252**

(87) Numéro de publication internationale:
**WO 2013/186065 (19.12.2013 Gazette 2013/51)**

(54) **PROCEDE POUR ESTIMER UNE VALEUR D'UNE RESISTANCE DE FREINAGE EMPLOYEE DANS UN CONVERTISSEUR DE PUISSANCE**

VERFAHREN ZUR BESTIMMUNG DES WERTES EINES BREMSWIDERSTANDES IN EINEM STROMWANDLER

METHOD FOR ESTIMATING THE VALUE OF A BRAKING RESISTOR USED IN A POWER CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2012 FR 1255542**

(43) Date de publication de la demande:
**22.04.2015 Bulletin 2015/17**

(73) Titulaire: **Schneider Toshiba Inverter Europe SAS 27120 Pacy sur Eure (FR)**

(72) Inventeurs:
• **LECHAT, David**
  **F-27120 Pacy sur Eure (FR)**

• **BARAUNA, Allan Pierre**
  **F-27200 Vernon (FR)**

(74) Mandataire: **Bié, Nicolas et al Schneider Electric Industries SAS Service Propriété Industrielle 35 rue Joseph Monier - CS 30323 92506 Rueil-Malmaison Cedex (FR)**

(56) Documents cités:
**EP-A2- 1 818 207     EP-A2- 2 106 016 US-A1- 2005 001 635**

## Description

### Domaine technique de l'invention

La présente invention se rapporte à un procédé et un système pour estimer une valeur d'une résistance de freinage employée dans un convertisseur de puissance.

### Etat de la technique

De manière connue, un convertisseur de puissance, destiné à commander un moteur électrique, comporte :

- un bus continu d'alimentation comportant deux lignes d'alimentation entre lesquelles est appliquée une tension continue,

- un condensateur de bus connecté aux deux lignes d'alimentation et chargé de maintenir la tension continue du bus à une valeur constante,

- un module onduleur connecté par trois phases de sortie au moteur électrique et commandé par des signaux de commande générés par une unité de commande.

Le convertisseur de puissance peut également comporter un module redresseur situé en entrée et destiné à convertir une tension alternative fournie par un réseau de distribution électrique en une tension continue qui est appliquée sur le bus.

Lors du freinage, le moteur électrique génère de l'énergie électrique qui est renvoyée sur le convertisseur de puissance. Si le module redresseur est réversible, cette énergie de freinage peut être renvoyée sur le réseau de distribution électrique. En revanche, si le module redresseur est non-réversible, par exemple constitué d'un pont de diodes, l'énergie électrique générée lors du freinage du moteur ne peut pas être renvoyée sur le réseau et est par exemple dissipée dans une résistance, appelée résistance de freinage. La résistance de freinage est incluse dans une cellule de freinage intégrée au convertisseur de puissance ou connectée à celui-ci. Cette cellule de freinage est connectée à la première ligne d'alimentation et à la deuxième ligne d'alimentation du bus, et positionnée entre le condensateur de bus et le module onduleur. Elle comporte un organe de commutation, une diode connectée en série avec l'organe de commutation et ladite résistance de freinage, qui est connectée en parallèle de la diode.

Un tel convertisseur de puissance est décrit dans le document EP2106016.

Un procédé d'estimation de la valeur d'une résistance de freinage d'un convertisseur de puissance est décrit dans le document EP1818207.

Dans une cellule de freinage, la résistance de freinage doit présenter une valeur minimale afin de garantir l'intégrité de l'organe de commutation et de la diode lors d'un freinage. Si cette valeur minimale n'est pas respectée, l'organe de commutation et la diode peuvent être endommagés, aucun système n'étant prévu pour les protéger.

Le but de l'invention est de proposer un procédé qui permet d'estimer la valeur de la résistance de freinage qui est employée dans la cellule de freinage, afin de pouvoir la comparer avec la résistance minimale autorisée par le fabricant.

### Exposé de l'invention

Ce but est atteint par un procédé pour estimer une valeur d'une résistance de freinage employée dans un convertisseur de puissance connecté à un moteur électrique, ledit convertisseur de puissance comportant :

- un bus continu d'alimentation comprenant une première ligne d'alimentation et une deuxième ligne d'alimentation,
- un condensateur de bus connecté à la première ligne d'alimentation et à la deuxième ligne d'alimentation,
- un module onduleur connecté au bus continu d'alimentation et au moteur électrique,
- une cellule de freinage connectée à la première ligne d'alimentation et à la deuxième ligne d'alimentation et comportant un organe de commutation, une diode connectée en série avec l'organe de commutation et la résistance de freinage connectée en parallèle de ladite diode,

ledit procédé étant caractérisé en ce qu'il est mis en oeuvre lors du freinage du moteur électrique et en ce qu'il consiste à :

- déterminer la valeur de la capacité du condensateur de bus lorsque l'organe de commutation est dans un état ouvert,
- déterminer la valeur de la résistance de freinage à partir de la valeur de la capacité du condensateur de bus, de la tension du bus continu d'alimentation et du courant généré par le moteur électrique lors du freinage lorsque l'organe de commutation est dans un état fermé.

Selon une particularité, le procédé comporte une étape de comparaison entre la valeur de la résistance de freinage déterminée et une valeur minimale requise.

Selon une autre particularité, si la valeur de la résistance de freinage déterminée est inférieure à la valeur minimale requise, il comporte une étape de freinage en roue libre du moteur électrique.

L'invention concerne un système pour estimer une valeur d'une résistance de freinage employée dans un convertisseur de puissance connecté à un moteur électrique, ledit convertisseur de puissance comportant :

- un bus continu d'alimentation comprenant une première ligne d'alimentation et une deuxième ligne d'alimentation,
- un condensateur de bus connecté à la première ligne d'alimentation et à la deuxième ligne d'alimentation,
- un module onduleur connecté au bus continu d'alimentation et au moteur électrique,
- une cellule de freinage connectée à la première ligne d'alimentation et à la deuxième ligne d'alimentation et comportant un organe de commutation, une diode connectée en série avec l'organe de commutation et la résistance de freinage connectée en parallèle de ladite diode,

ledit système étant caractérisé en ce qu'il comporte un module d'estimation activé lors du freinage du moteur électrique, ledit module d'estimation comportant :

- des moyens de détermination la valeur de la capacité du condensateur de bus mis en oeuvre lorsque l'organe de commutation est dans un état ouvert,
- des moyens de détermination de la valeur de la résistance de freinage à partir de la valeur de la capacité du condensateur de bus, de la tension du bus continu d'alimentation et du courant généré par le moteur électrique lors du freinage, activés lorsque l'organe de commutation est dans un état fermé.

Selon une particularité, le système comporte des moyens de comparaison entre la valeur déterminée de la résistance de freinage et une valeur minimale requise.

Selon une autre particularité, si la valeur de la résistance de freinage déterminée est inférieure à la valeur minimale requise, le système est agencé pour activer des moyens de freinage en roue libre du moteur électrique.

**Brève description des figures**

D'autres caractéristiques **et** avantages vont apparaître dans la description détaillée qui suit faite en regard des dessins annexés dans lesquels :

- la figure 1 représente un schéma d'un convertisseur de puissance incluant une cellule de freinage,

- la figure 2 représente le schéma équivalent du convertisseur de puissance lors d'une séquence de freinage,

- la figure 3 illustre une séquence de freinage et représente le circuit équivalent pour chaque étape de la séquence,

- la figure 4 représente l'algorithme mis en oeuvre pour estimer la valeur de la résistance de freinage.

**Description détaillée d'au moins un mode de réalisation**

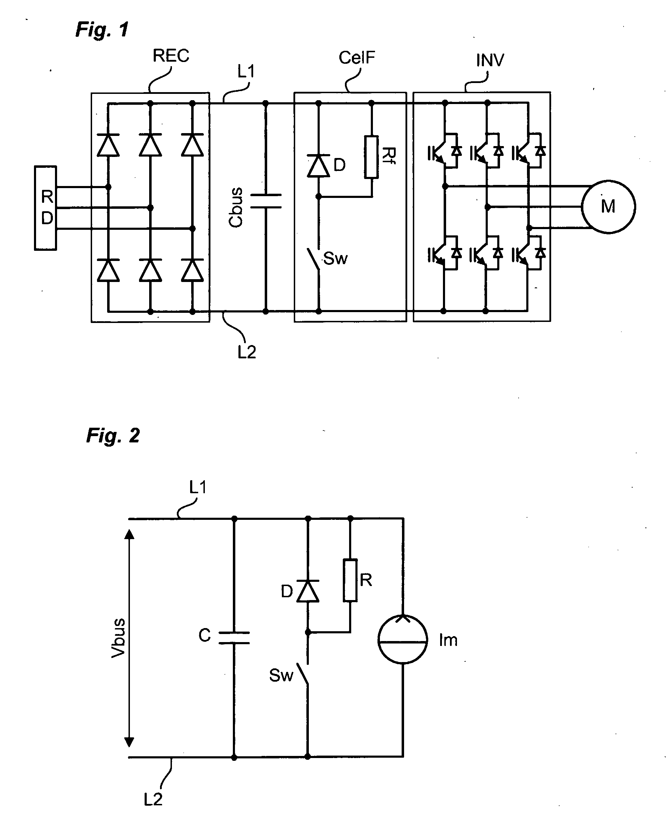

En référence à la figure 1, un convertisseur de puissance comporte principalement :

- un bus continu d'alimentation comportant deux lignes d'alimentation L1, L2 entre lesquelles une tension continue est appliquée,

- un condensateur de bus Cbus connecté aux deux lignes d'alimentation L1, L2 et chargé de maintenir la tension continue du bus à une valeur constante,

- un module onduleur INV connecté par trois phases de sortie à un moteur électrique M et commandé par des signaux de commande générés par une unité de commande mettant en oeuvre une loi de commande déterminée. Le module onduleur INV comporte plusieurs bras de commutation, par exemple au nombre de trois si le moteur M est triphasé. Chaque bras de commutation comporte deux transistors de puissance, par exemple de type IGBT, commandés chacun par un dispositif de commande recevant des signaux de commande de la part de l'unité de commande.

L'invention est décrite plus précisément pour un convertisseur de puissance de type variateur de vitesse. De manière connue, un variateur de vitesse comporte en plus un module redresseur REC connecté par trois phases d'entrée à un réseau RD de distribution électrique et destiné à convertir une tension alternative fournie par le réseau RD de distribution électrique en une tension continue appliquée sur le bus continu d'alimentation.

L'invention s'applique plus particulièrement à un convertisseur de puissance doté d'un module redresseur à pont de diodes, et doté d'une cellule de freinage CelF employée pour dissiper l'énergie générée par le moteur électrique M lors du freinage.

De manière connue, une cellule de freinage CelF est connectée à la première ligne d'alimentation L1 et à la deuxième ligne d'alimentation L2. Elle comporte un organe de commutation Sw et une diode D connectée en série avec l'organe de commutation Sw, ainsi qu'une résistance de freinage Rf connectée en parallèle de ladite diode D.

Le procédé de l'invention est par exemple mis en oeuvre dans l'unité de commande qui est incluse dans le convertisseur de puissance ou externe à celui-ci. Elle comporte des moyens de traitement et un module d'estimation exécuté par les moyens de traitement pour estimer la valeur de la résistance de freinage Rf.

La figure 2 représente le circuit équivalent à celui de la figure 1 lors du freinage du moteur électrique.

Ce circuit équivalent comporte ainsi une source de tension délivrant la tension Vbus, le condensateur de bus de capacité C, l'organe de commutation Sw, la diode D, la résistance de freinage Rf de valeur R et une source de courant délivrant un courant Im lors du freinage du moteur électrique M.

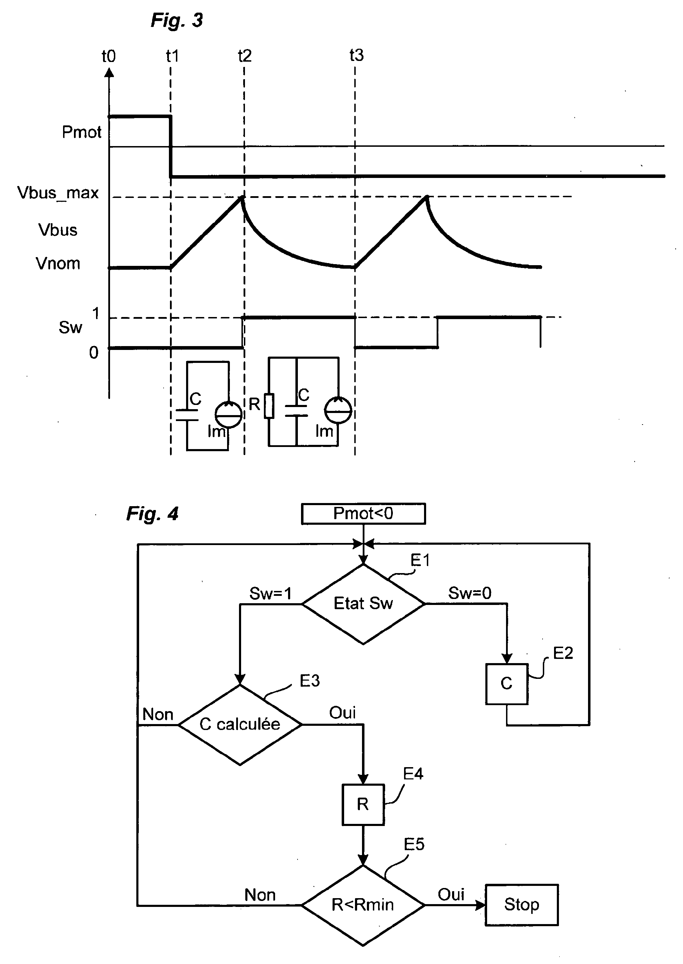

En référence à la figure 3, entre t0 et t1, le moteur électrique M est en mode récepteur et consomme l'énergie électrique qui lui est délivrée. La puissance Pmot est fournie par le drive au moteur électrique M. La tension Vbus reste constante à sa valeur nominale Vnom. L'organe de commutation Sw de la cellule de freinage CelF est alors dans un état ouvert.

Sur la figure 3, à partir de t1 une séquence de freinage débute. Lors du freinage du moteur électrique, le moteur électrique M devient générateur et l'énergie électrique générée lors du freinage est renvoyée vers le convertisseur. La puissance Pmot est fournie par le moteur électrique M au drive.

Entre t1 et t2, l'organe de commutation Sw étant à l'état ouvert, la tension Vbus du bus continu d'alimentation augmente jusqu'à une valeur maximale Vbus_max. Le schéma équivalent à cette configuration comporte le condensateur de bus de capacité C et la source de courant délivrant le courant Im.

Entre t2 et t3, l'organe de commutation Sw est commandé à l'état fermé afin de dissiper l'énergie de freinage dans la résistance de freinage Rf et ainsi ramener la tension Vbus du bus continu d'alimentation à une valeur acceptable, par exemple sa valeur nominale Vnom. Le schéma équivalent à cette configuration comporte ainsi le condensateur de bus de capacité C, la résistance de freinage de valeur R connectée en parallèle du condensateur de bus Cbus et la source de courant Im.

Cette séquence de freinage est répétée plusieurs fois, jusqu'à dissipation complète de toute l'énergie de freinage dans la résistance de freinage.

Cette séquence de freinage permet de mieux comprendre le procédé d'estimation de la résistance de freinage de l'invention.

En référence à la figure 4, le procédé est mis en oeuvre lors du freinage du moteur électrique M, c'est-à-dire lorsque la puissance Pmot est fournie par le moteur électrique M au drive.

Selon ce procédé, dans une première étape E1, le module d'estimation met en oeuvre des moyens de détermination de l'état de l'organe de commutation Sw.

Si l'organe de commutation Sw est à l'état ouvert, dans une étape E2, le module d'estimation met en oeuvre des moyens de détermination de la valeur de la capacité C du condensateur de bus Cbus. Comme représenté à la figure 3, lorsque l'organe de commutation Sw est à l'état ouvert, le schéma équivalent du circuit comporte le condensateur de bus de capacité C et la source de courant Im. Il est ainsi possible de déterminer la valeur de la capacité C du condensateur de bus en appliquant les expressions suivantes :

$$C = \frac{1}{V_{bus}(t) - V_{bus}(0)} \int Ic(t)dt$$

$$Ic(t) = Im(t)$$

Dans lesquelles :

- C représente la capacité du condensateur de bus,
- Ic représente le courant traversant le condensateur de bus,
- Vbus représente la tension du bus continu d'alimentation initiale et à l'instant t,
- Im représente le courant généré par le moteur électrique lors du freinage.

Une fois la valeur de la capacité C calculée, celle-ci est mémorisée dans des moyens de mémorisation de l'unité de commande.

Le module d'estimation revient à la première étape pour surveiller l'état de l'organe de commutation Sw.

Si l'organe de commutation Sw est à l'état fermé, le module d'estimation vérifie, dans une étape E3, si la valeur de la capacité C a déjà été calculée.

Si la valeur de la capacité C n'a pas été calculée, le module d'estimation revient à la première étape E1 et attend que l'organe de commutation Sw passe à l'état ouvert pour calculer la valeur de la capacité C, comme décrit ci-dessus.

Si la valeur de la capacité C a déjà été calculée, le module d'estimation peut, dans une étape E4, en déduire la valeur R de la résistance de freinage Rf.

La valeur R de la résistance de freinage Rf est déterminée à partir des relations suivantes :

$$\frac{dV_{bus}(t)}{dt} + \frac{V_{bus}(t)}{\tau} = \frac{Im(t)}{C}$$

$$\Rightarrow R = \frac{V_{bus}(t)}{Im(t) - C\frac{dV_{bus}(t)}{dt}}$$

$$\tau = R * C$$

$\tau$ représente la constante de temps du filtre RC.

Une fois la valeur R de la résistance de freinage Rf déterminée, le module d'estimation est amené, dans une étape E5, à la comparer à la valeur de la résistance minimale Rmin requise et mémorisée préalablement. Si la résistance de freinage Rf présente une valeur supérieure à celle de la résistance minimale Rmin requise, le freinage peut se poursuivre, en évitant tout dommage. En revanche, si la résistance de freinage Rf présente une valeur R inférieure à celle de la résistance minimale Rmin requise, la séquence de freinage est stoppée. Le convertisseur de puissance est bloqué et le moteur est alors laissé en roue libre jusqu'à son arrêt total.

## Revendications

1. Procédé pour estimer une valeur d'une résistance de freinage (Rf) employée dans un convertisseur de puissance connecté à un moteur électrique (M), ledit convertisseur de puissance comportant :

   - un bus continu d'alimentation comprenant une première ligne d'alimentation (L1) et une deuxième ligne d'alimentation (L2),
   - un condensateur de bus (Cbus) connecté à la première ligne d'alimentation et à la deuxième ligne d'alimentation,
   - un module onduleur (INV) connecté au bus continu d'alimentation et au moteur électrique (M),
   - une cellule de freinage (CelF) connectée à la première ligne d'alimentation (L1) et à la deuxième ligne d'alimentation (L2) et comportant un organe de
   - commutation (Sw), une diode (D) connectée en série avec l'organe de commutation et la résistance de freinage (Rf) connectée en parallèle de ladite diode,

   ledit procédé étant **caractérisé en ce qu'**il est mis en oeuvre lors du freinage du moteur électrique (M) et **en ce qu'**il consiste à :

   - déterminer la valeur de la capacité (C) du condensateur de bus lorsque l'organe de commutation est dans un état ouvert,
   - déterminer la valeur (R) de la résistance de freinage (Rf) à partir de la valeur de la capacité (C) du condensateur de bus, de la tension (Vbus) du bus continu d'alimentation et du courant (Im) généré par le moteur électrique lors du freinage lorsque l'organe de commutation est dans un état fermé.

2. Procédé selon la revendication 1, **caractérisé en ce qu'**il comporte une étape de comparaison entre la valeur (R) déterminée de la résistance de freinage (Rf) et une valeur minimale (Rmin) requise.

3. Procédé selon la revendication 2, **caractérisé en ce que**, si la valeur de la résistance de freinage déterminée est inférieure à la valeur minimale requise, il comporte une étape de freinage en roue libre du moteur électrique.

4. Système pour estimer une valeur d'une résistance de freinage (Rf) employée dans un convertisseur de puissance connecté à un moteur électrique (M), ledit convertisseur de puissance comportant :

   - un bus continu d'alimentation comprenant une première ligne d'alimentation (L1) et une deuxième ligne d'alimentation (L2),
   - un condensateur de bus (Cbus) connecté à la première ligne d'alimentation et à la deuxième ligne d'alimentation,
   - un module onduleur (INV) connecté au bus continu d'alimentation et au moteur électrique (M),
   - une cellule de freinage (CelF) connectée à la première ligne d'alimentation (L1) et à la deuxième ligne d'alimentation (L2) et comportant un organe de commutation (Sw), une diode (D) connectée en série avec l'organe de commutation et la résistance de freinage (Rf) connectée en parallèle de ladite diode,

   ledit système étant **caractérisé en ce qu'**il comporte un module d'estimation activé lors du freinage du moteur électrique (M), ledit module d'estimation comportant :

   - des moyens de détermination la valeur de la capacité (C) du condensateur de bus mis en oeuvre lorsque l'organe de commutation est dans un état ouvert,
   - des moyens de détermination de la valeur (R) de la résistance de freinage (Rf) à partir de la valeur de la capacité (C) du condensateur de bus, de la tension (Vbus) du bus continu d'alimentation et du courant (Im) généré par le moteur électrique lors du freinage, activés lorsque l'organe de commutation est dans un état fermé.

5. Système selon la revendication 4, **caractérisé en ce qu'**il comporte des moyens de comparaison entre la valeur (R) déterminée de la résistance de freinage (Rf) et une valeur minimale (Rmin) requise.

6. Système selon la revendication 5, **caractérisé en ce que**, si la valeur de la résistance de freinage déterminée est inférieure à la valeur minimale requise, le système est agencé pour activer des moyens de freinage en roue libre du moteur électrique.

## Patentansprüche

1. Verfahren zur Schätzung eines Werts eines Bremswiderstands (Rf), der in einem mit einem Elektromotor (M) verbundenen Stromrichter verwendet wird, wobei der Stromrichter aufweist:

- einen Versorgungs-Gleichstrombus, der eine erste Versorgungsleitung (L1) und eine zweite Versorgungsleitung (L2) enthält,
- einen Bus-Kondensator (Cbus), der mit der ersten Versorgungsleitung und mit der zweiten Versorgungsleitung verbunden ist,
- ein Wechselrichtermodul (INV), das mit dem Versorgungs-Gleichstrombus und mit dem Elektromotor (M) verbunden ist,
- eine Bremszelle (CelF), die mit der ersten Versorgungsleitung (L1) und mit der zweiten Versorgungsleitung (L2) verbunden ist und ein Schaltorgan (Sw), eine Diode (D), die in Reihe mit dem Schaltorgan verbunden ist, und den Bremswiderstand (Rf) aufweist, der mit der Diode parallelgeschaltet ist,

wobei das Verfahren **dadurch gekennzeichnet ist, dass** es beim Bremsen des Elektromotors (M) angewendet wird und darin besteht:

- den Wert der Kapazität (C) des Bus-Kondensators zu bestimmen, wenn das Schaltorgan in einem offen Zustand ist,
- den Wert (R) des Bremswiderstands (Rf) ausgehend vom Wert der Kapazität (C) des Bus-Kondensators, der Spannung (Vbus) des Versorgungs-Gleichstrombusses und vom Strom (Im) zu bestimmen, der vom Elektromotor beim Bremsen erzeugt wird, wenn das Schaltorgan in einem geschlossenen Zustand ist.

2. Verfahren nach Anspruch 1, **dadurch gekennzeichnet, dass** es einen Schritt des Vergleichs zwischen dem bestimmten Wert (R) des Bremswiderstands (Rf) und einem erforderlichen Mindestwert (Rmin) aufweist.

3. Verfahren nach Anspruch 2, **dadurch gekennzeichnet, dass** es, wenn der bestimmte Wert des Bremswiderstands niedriger als der erforderliche Mindestwert ist, einen Freilaufbremsschritt des Elektromotors aufweist.

4. System zur Schätzung eines Werts eines Bremswiderstands (Rf), der in einem mit einem Elektromotor (M) verbundenen Stromrichter verwendet wird, wobei der Stromrichter aufweist:

- einen Versorgungs-Gleichstrombus, der eine erste Versorgungsleitung (L1) und eine zweite Versorgungsleitung (L2) enthält,
- einen Bus-Kondensator (Cbus), der mit der ersten Versorgungsleitung und mit der zweiten Versorgungsleitung verbunden ist,
- ein Wechselrichtermodul (INV), das mit dem Versorgungs-Gleichstrombus und mit dem Elektromotor (M) verbunden ist,
- eine Bremszelle (CelF), die mit der ersten Versorgungsleitung (L1) und mit der zweiten Versorgungsleitung (L2) verbunden ist und ein Schaltorgan (Sw), eine in Reihe mit dem Schaltorgan verbundene Diode (D) und den Bremswiderstand (Rf) mit der Diode parallelgeschaltet aufweist,

wobei das System **dadurch gekennzeichnet ist, dass** es ein Schätzmodul aufweist, das beim Bremsen des Elektromotors (M) aktiviert wird, wobei das Schätzmodul aufweist:

- Einrichtungen zur Bestimmung des Werts der Kapazität (C) des Bus-Kondensators, die angewendet werden, wenn das Schaltorgan in einem offenen Zustand ist,
- Einrichtungen zur Bestimmung des Werts (R) des Bremswiderstands (Rf) ausgehend vom Wert der Kapazität (C) des Bus-Kondensators, von der Spannung (Vbus) des Versorgungs-Gleichstrombusses und vom Strom (Im), der vom Elektromotor beim Bremsen erzeugt wird, die aktiviert werden, wenn das Schaltorgan in einem geschlossenen Zustand ist.

5. System nach Anspruch 4, **dadurch gekennzeichnet, dass** es Vergleichseinrichtungen zwischen dem bestimmten Wert (R) des Bremswiderstands (Rf) und einem erforderlichen Mindestwert (Rmin) aufweist.

6. System nach Anspruch 5, **dadurch gekennzeichnet, dass**, wenn der Wert des bestimmten Bremswiderstands niedriger als der erforderliche Mindestwert ist, das System eingerichtet ist, um Freilaufbremseinrichtungen des Elektromotors zu aktivieren.

**Claims**

1. Method for estimating a value of a braking resistor (Rf) used in a power converter connected to an electric motor (M), said power converter comprising:

- a DC power-supply bus comprising a first power supply line (L1) and a second power supply line (L2);
- a bus capacitor (Cbus) connected to the first power supply line and to the second power supply line;
- an inverter module (INV) connected to the DC power-supply bus and to the electric motor (M);
- a braking cell (CelF) connected to the first power supply line (L1) and to the second power supply line (L2) and comprising a switching unit (Sw), a diode (D) connected in series with the switching unit and the braking resistor (Rf) connected in parallel to said diode,

said method being **characterized in that** it is implemented during braking of the electric motor (M) and **in that** it comprises:

- determining the value of the capacitance (C) of the bus capacitor when the switching unit is in an open state;
- determining the value (R) of the braking resistor (Rf) based on the value of the capacitance (C) of the bus capacitor, on the voltage (Vbus) of the DC power-supply bus and on the current (Im) generated by the electric motor during braking when the switching unit is in a closed state.

2. Method according to Claim 1, **characterized in that** it comprises a step of comparing between the determined value (R) of the braking resistor (Rf) and a minimum required value (Rmin).

3. Method according to Claim 2, **characterized in that**, if the determined value of the braking resistor is less than the minimum required value, it comprises a braking step during which the electric motor is in freewheel.

4. System for estimating a value of a braking resistor (Rf) used in a power converter connected to an electric motor (M), said power converter comprising:

- a DC power-supply bus comprising a first power supply line (L1) and a second power supply line (L2);
- a bus capacitor (Cbus) connected to the first power supply line and to the second power supply line;
- an inverter module (INV) connected to the DC power-supply bus and to the electric motor (M);
- a braking cell (CelF) connected to the first power supply line (L1) and to the second power supply line (L2) and comprising a switching unit (Sw), a diode (D) connected in series with the switching unit and the braking resistor (Rf) connected in parallel to said diode,

said system being **characterized in that** it comprises an estimation module activated during braking of the electric motor (M), said estimation module comprising:

- means for determining the value of the capacitance (C) of the bus capacitor implemented when the switching unit is in an open state;
- means for determining the value (R) of the braking resistor (Rf) based on the value of the capacitance (C) of the bus capacitor, on the voltage (Vbus) of the DC power-supply bus and on the current (Im) generated by the electric motor during braking, which means are activated when the switching unit is in a closed state.

5. System according to Claim 4, **characterized in that** it comprises means for comparing between the determined value (R) of the braking resistor (Rf) and a minimum required value (Rmin).

6. System according to Claim 5, **characterized in that**, if the determined value of the braking resistor is less than the minimum required value, then the system is designed to activate braking means during which the electric motor is in freewheel.

*Fig. 1*

*Fig. 2*

*Fig. 3*

*Fig. 4*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2106016 A

- EP 1818207 A